# EUROPEAN PATENT APPLICATION

(11) **EP 4 722 570 A1**
(43) Date of publication of application: **08.04.2026**
(21) Application number: 24739231.9
(22) Date of filing: 30.05.2024
(51) Int. Cl.: F16K 1/40, F16K 27/02, F16K 1/54, F16K 1/38, F16K 31/04

(54) **ELECTRONIC FLOW REGULATION VALVE AND LIQUID REGULATION AND SUPPLY DEVICE INCLUDING SAME**

(30) Priority: 31.05.2023 ES 202330438
(71) Applicant: Sedal Digital Systems, S.L., 08740 Sant Andreu De La Barca (ES)
(72) Inventor: CASTRO MOLINA, Maximilià, 08740 SANT ANDREU DE LA BARCA (BARCELONA) (ES); BELLO LARROCHE, Rafael, 08740 SANT ANDREU DE LA BARCA (BARCELONA) (ES)
(74) Representative: Ponti & Partners, S.L.P
(86) International application number: PCT/ES2024/070331
(87) International publication number: WO 2024/246396

(57) **Abstract**

The present invention relates to an electronic flow regulation and closure valve by means of the coupling of a piston against a seat, with linear drive of the stem that displaces the piston by means of a motorized system for the regulation of the flow of liquid passing through said valve, wherein the piston comprises a guiding appendage coaxial with the axis of displacement and that passes through a guiding housing located at the end part of the downstream valve body, formed by a passage to be crossed by the guiding appendage and, wherein the valve body comprises a liquid outlet from the regulation zone that is made, at least, radially by one or more openings arranged substantially parallel to the axis. The present invention also relates to a liquid regulation and supply device including the above electronic valve.

## Description

The present invention relates to an electronic valve for flow regulation and closing by the coupling of a piston against a seat, with linear drive of the piston rod that displaces the piston by means of a motorised system for regulating the flow of liquid passing through said valve.

The present invention also relates to a liquid regulation and supply device including the above electronic valve.

### Background of the invention

The use is known in the prior art of electronic valves for regulating the flow of liquid passing through them, which employ a flow regulation system by means of the coupling the valve piston and its seat and the corresponding passage section between them.

These electronic valves usually have a configuration in which the position of the piston with respect to its seat is regulated by the motorized movement of a shaft, piston rod, to which said piston is attached, and moves it between a closed position and a fully open position in which the free passage section between the piston and the seat is maximum. Between these two positions the piston reduces the liquid passage section as it moves towards full coupling, closure, on the seat.

When determining the position of the piston and, therefore, the free passage section between the piston and the seat which determines the flow of liquid passing through the valve, different geometries of piston and seat are known that allow having different properties in the progressiveness of the passage section and, consequently, of the liquid flow, when the motorized shaft displaces the piston with respect to the seat.

In this regard, pistons of this type of valves usually have truncated cone configurations, while the seat located in the body of the valve is configured to at least have a section or geometry for receiving a part of the piston that allows defining the end-of-stroke position of the displacement of the piston rod with the piston attached to it. The watertight sealing of the liquid passage through the open section between the piston and the seat is carried out in a conventional manner by means of an O-ring between the piston and the seat, at some point of the piston's advance path prior to the end-of-stroke position or in that position, wherein this watertight sealing can be carried out upstream or below the regulation zone.

This type of valve, due to its configuration with displacement of the piston by means of a shaft driven from one end by a motorized system, has the drawback of potentially suffering from mechanical vibrations, as well as noise that is produced by the turbulent flow when crossing the flow throttling zone, between piston and seat, at certain ranges of opening position in the known examples.

In the prior art there are systems for introducing the end of the shaft closest to the piston into the walls of the valve, for support and guidance thereof, formed by a blind housing where the fluid which this support and guidance area is in contact with is not renewed, such that impurities accumulate in said area.

### Description of the invention

The purpose of the present invention is to provide an electronic valve with a linear drive motor, as well as a liquid regulation and supply device that includes it, which solve the aforementioned drawbacks, offering further advantages which will be described below.

Thus, and in accordance with these objectives, with respect to a first aspect the present invention is based on an electronic flow regulation valve with a seat and motor-driven piston. The electronic valve of the present invention comprises a valve body to which a drive system is coupled, wherein the valve body comprises a regulation zone with at least one connection to a liquid inlet to a regulation zone inside the valve and a connection to a liquid outlet of the regulation zone inside the valve.

The regulation zone comprises a flow regulation system formed by at least one displaceable piston that throttles a passage flow when closing on a seat, wherein the piston is actuated by the drive system of the electronic valve between two extreme positions, from a closed position wherein the piston closes completely by coupling on the seat, to a fully open position wherein the liquid passage section between the piston and the seat is maximum. This closure by coupling is performed by the sealing of a joint fixed to the piston and/or the geometric shape of the coupling between the piston and the seat.

Advantageously for the present invention, the piston comprises a variable geometry profile body and a front guiding appendage solidly attached to said variable geometry profile body, as a projection that protrudes frontally at the end of the piston located downstream, wherein the guiding appendage is located coaxially with the piston rod of displacement of the piston and passes through a guiding housing.

Also advantageously for the invention, the valve body comprises this guiding housing downstream at its end part of the valve body, wherein the guiding housing is formed by at least one passage through a guide body, wherein the geometry of the passage is complementary to that of the guiding appendage, both configured so that the guiding housing remains coaxial with the guiding appendage throughout its displacement between the extreme positions of regulation by the support and sliding of the guiding appendage in the guiding housing.

In addition and also advantageously, the valve body comprises a liquid outlet of the regulation zone downstream of the regulation of its flow by the interaction between the piston and the seat, so that the outlet is performed, at least, radially by one or more openings arranged substantially parallel to the axis of displacement of the piston.

This configuration of the invention allows to have an electronic valve comprising a flow regulation system formed by at least one displaceable piston that throttles a passage flow when closing on a seat, wherein the piston is actuated by the drive system of the electronic valve according to the requirements of the conditions of the mixture regulated by a conventional control system, not described in the present application and, wherein, the displacement of the piston is carried out without vibrations and noise being produced by the turbulent liquid flow when crossing the flow throttling zone at certain opening position ranges. This is achieved by having a piston rod that, on the one hand, in a conventional manner, has a first guide and support of the piston rod in the proximal area to the drive system and, on the other hand, advantageously incorporates a guiding housing in its distal part with respect to the drive system that provides supports at the ends of the guiding appendage without cantilevered section, improving the coaxiality of the piston.

With this configuration, the guiding housing arranged to support and guide the piston rod at its distal end with respect to the drive system is in a position in which it is immersed in the flow of liquid from the valve, whereby the fluid which the guiding housing is in contact with is renewed and no impurities accumulate therein.

According to a possible embodiment of the invention, preferably, the regulation zone comprises one or more openings arranged substantially parallel to the axis of displacement of the piston creating a liquid outlet radially from said regulation zone, as well as one or more openings arranged substantially transverse to the axis of displacement of the piston creating a liquid outlet with flow substantially parallel to the axis of displacement of the piston.

This configuration adds an axial component to the flow of the liquid at the outlet of the regulation zone, which reduces the pressure losses in the valve as the moment of part of the flow remains unchanged.

In this regard, and according to one possible embodiment of the above configuration, the liquid outlet of the regulation zone is mostly performed radially. This configuration, for a valve configuration with a reduced diameter in the regulation zone, allows a higher dimensioning of the liquid outlet surfaces at the side walls of the part that contains them in correspondence with the dimensioning of the outlet surfaces at the front or transverse wall where the guiding housing is located, so as not to have the need to increase the outlet diameter of the regulation zone to obtain a larger axial water outlet section when it is mostly occupied by the guiding housing part.

According to a possible embodiment of the invention, the guiding housing is preferably formed by a guide body forming one single piece with the seat of the regulation zone and the liquid outlet openings of the regulation zone, wherein this single piece is independent and is coupled to the rest of the valve body at its end downstream of the regulation zone, configured so that the passage opening that passes through the guiding appendage of the piston remains coaxial with the displacement of said guiding appendage and, consequently, with the assembly that it forms with the piston and its axis, in all its displacement positions.

This embodiment allows having a simple and economical configuration for simplicity of production and formation of the overall part of the valve body. This configuration is thus based on two parts, a first independent part comprising the guide body, the seat of the regulation zone and the part containing the outlet openings, and a second part to which the first part and the drive system are coupled.

According to another possible embodiment of the invention, the guiding housing is formed by a guide body forming a single piece with the seat of the regulation zone and the liquid outlet openings of the regulation zone and in turn a single piece with the rest of the valve body, configured so that the passage opening that passes through the guiding appendage of the piston remains coaxial with the displacement of said guiding appendage and, consequently, with the assembly that it forms with the piston and its piston rod, in all its displacement positions.

This alternative configuration allows a compact solution of the valve body in a single piece, requiring assembly only to the engine system.

According to an alternative embodiment of the invention, with regard to the previous two configurations of how the valve body and its different main parts are constituted, the guiding housing is formed by a guide body forming a separate part with respect to the part that defines the assembly of the seat of the regulation zone and the liquid outlet openings of the regulation zone, wherein this part is coupled to the part that defines the seat of the regulation zone, wherein this part of the assembly is the same part as the rest of the valve body or is another independent part that is joined integrally to the rest of the valve body at its end downstream of the regulation zone, configured so that the passage opening that crosses the piston guiding appendage remains coaxial with the displacement of said appendage and, consequently, with the assembly that it forms with the piston and its axis, in all its displacement positions.

This configuration, which starts from the possibility that the seat of the regulation zone and the liquid outlet openings of the regulation zone can be in a part separate from the rest of the valve body and that is coupled to it, or that said seat and liquid outlet openings are integrated in a single piece with the valve body, introduces the configuration of a housing body formed by a separate part, which allows a better tribology of the materials, allowing to choose a specific material with better properties for said body without having to associate it with an entire part of a larger size and with different design needs.

Preferably, although other configurations are alternatively possible, the guide body is formed by a ring configured to have an opening of complementary geometry to the piston guiding appendage and allow the slidably supported passage of said guiding appendage through it, while its ring geometry allows the integration or coupling thereof in the part containing the liquid outlet openings and the seat of the regulation zone. As indicated, other configurations are possible, and cylindrical bodies or guide bodies compatible with a displacement guided by them of the piston guiding appendage should be understood as equivalent to this ring configuration.

With respect to the position of the guide body, it is located flush with the end downstream of said openings so that a liquid accumulation tank is not generated in the liquid outlet zone downstream of the liquid outlets. This avoids the accumulation of particles in a base as can happen in the configurations of the prior art that use blind holes.

These previous embodiments of the valve body allow an assembly configuration in several parts according to their final function described and make their manufacture viable using different technologies such as machining and injection of thermoplastics among others, reducing the production and assembly costs of the parts. They also allow the choice of materials for each of the parts, which ensures good tribological behaviour between the frictional torques in the working conditions of the valve, minimising frictional forces and wear during the life of the valve.

Also optionally but preferably, according to the previous embodiments, the piston guiding appendage is formed by a separate part of the piston body with a variable geometry profile, to which it is integrally coupled such that the piston and guiding appendage assembly remain coaxial with the displacement axis.

This possibility of having a piston independent of the guiding appendage but integrally coupled to it allows the most efficient choice of materials possible with respect to cost and properties for its function, as indicated above for other embodiments.

Thus, according to another possible embodiment of the invention, the guide appendage is mainly composed of stainless steel, while the piston to which it is coupled is mainly composed of a plastic material. This allows a reduced cost configuration but with properties in the guide appendage that allow the reliability of the support and the sliding function of the same in the guiding housing. The majority composition in these cases must be understood as a majority proportion by weight of the element itself.

Alternatively to this previous embodiment, the guiding appendage is formed by the same piece as the variable geometry profile body of the piston, wherein the assembly in a single piece of the piston and guiding appendage is coaxial with the axis of displacement of the assembly. This configuration allows for greater assembly simplicity and less variability in mounting tolerances.

According to a possible embodiment of the invention, applicable to any previous main configuration, the variable geometry profile body of the piston is of frustoconical geometry.

As an alternative to the above embodiment, the variable geometry profile body of the piston is of elliptical geometry.

Also as an alternative to the previous two embodiments, the variable geometry profile body of the piston is composed of straight and/or curved sections without defining a specific geometry profile.

These embodiments, based on the geometric configuration of the variable geometry profile, allow choosing the flow curve pattern with respect to the piston stroke for the same seat geometry.

According to another possible embodiment of the invention, complementary to any of the previous embodiments, the variable geometry profile body of the piston is configured so that the outer surface has a helical groove for the passage of liquid through it at the moment when the position of the piston with respect to the seat and its coupling surfaces on the seat allow the passage of liquid towards the liquid outlet of the valve body.

This configuration of the outer surface of the piston body with helical grooving generates a pressure loss in the liquid flow that runs through said grooving additional to that produced in the variable passage section of the piston so that, for a given piston size and compared to a piston body with a smooth outer surface without grooving, this additional pressure loss allows to improve the flow regulation for very low flow rates, lower than the flow rates that can be regulated in the absence of said feature.

In accordance with the objects indicated above, with respect to a second aspect, the present invention is based on a liquid regulation and supply device, wherein this device includes at least one electronic valve with a linear drive motor with a control system that controls the actuation of the regulation system of the at least one electronic valve.

Advantageously, the at least one electronic valve is configured as indicated in any of the embodiments indicated in the first aspect of the invention.

This configuration of a liquid regulation and supply device allows to have the advantages of simplicity, compactness, configuration, efficiency, operation and costs of the electronic valve indicated in the first aspect of the embodiments of the present description of the invention.

According to a preferred embodiment of the invention, the liquid regulation and supply device is configured as a mixing box with an electronic valve as described in the embodiments of the first aspect of the invention, for each of the liquid inlets to said liquid mixing box.

According to another possible embodiment of the invention, the liquid regulation and supply device is configured as an electronic tap with an electronic valve as described in the embodiments of the first aspect of the invention, for each of the liquid inlets to said electronic liquid regulation and supply tap.

### Brief description of the drawings

For a better understanding of the description made herein, a set of drawings has been provided wherein, schematically and solely by way of a non-limiting example, different practical cases of embodiments are represented.
Figures 1a and 1b shows two perspective views of a valve in a first preferred embodiment, wherein figure 1a is a view of the assembled valve and figure 1b is an exploded view of the same valve.
Figure 2 is a sectional view of the assembled valve of Figures 1a and 1b.
Figure 3 is an exploded view of a valve of an alternative embodiment with respect to the configuration of the piston.
Figure 4 is a sectional view of the assembled valve of Figure 2.
Figure 5 is an exploded view of a valve of another alternative embodiment with respect to the configuration of the guiding appendage and the piston body.
Figure 6 is a sectional view of the assembled valve of Figure 5.
Figure 7 is an exploded view of a valve of an alternative embodiment with respect to the configuration of the guiding housing.
Figure 8 is a sectional view of the assembled valve of Figure 7.
Figures 9a and 9b shows two views of a mixer box type flow regulation device installing two valves as shown in Figures 1a, 1b and 2, wherein Figure 9a is a schematic view of the open mixer box with the valves mounted on each of the liquid supply lines to the box and Figure 9b is a partial sectional view of the arrangement of the valves.

### Description of a preferred embodiment

In order to facilitate the understanding of the present disclosure, possible embodiments of technical solutions of the present invention are described below to facilitate a sufficient understanding thereof.

However, it should be noted that the present invention can be implemented in ways different from those described in this application without limiting the specific scope of protection of these embodiments, in the awareness that a person skilled in the art could make similar variations without departing from the scope of the present disclosure.

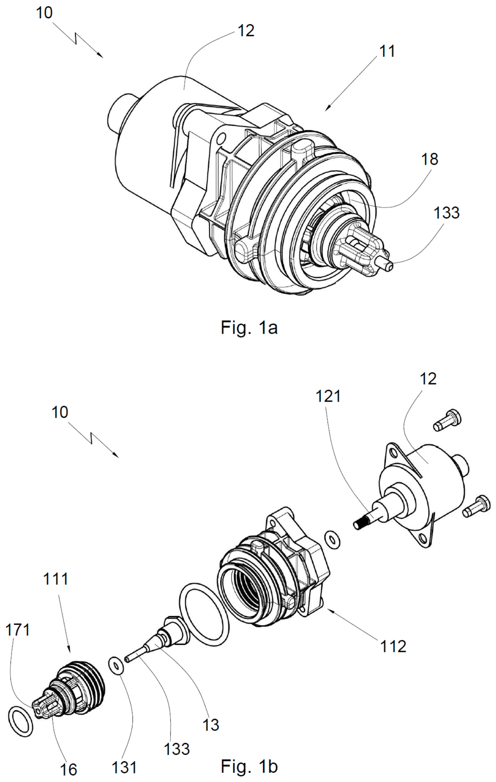

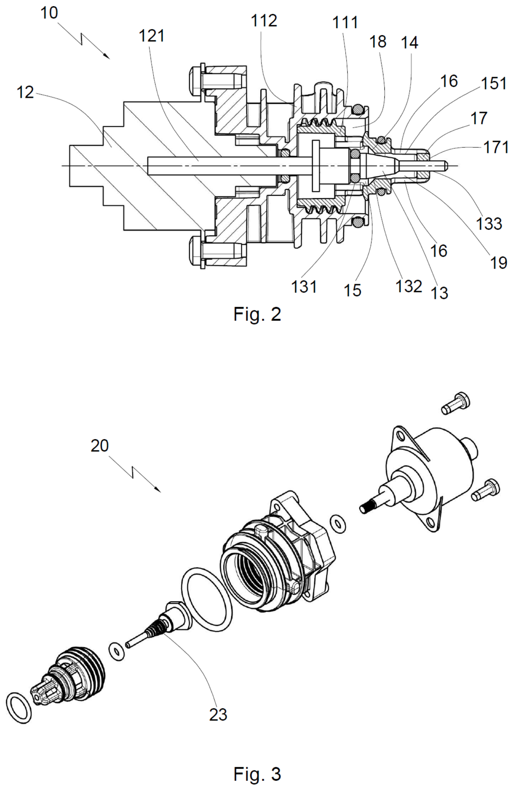

In a first preferred embodiment of the invention, and as shown in Figures 1a, 1b and Figure 2, the electronic valve (10) is formed by a valve body (11) to which a drive system (12) is coupled, which displaces a piston rod (121) to which a piston (13) is attached. This drive system (12), in the present preferred embodiment, is a stepper motor which allows regulating the displacement of the piston rod (121) in a precise way and, therefore, the position of the piston (13).

The valve body (11) is formed by two main parts, a first part (111) comprising:
- the seat (14) of the liquid flow regulation zone (15), where the piston (13) and its corresponding seal (131) make their coupling and closure;
- the liquid outlet openings (16) of the regulation zone (15); and
- the guiding housing (17) of the piston displacement (13).

The valve body (11) comprises a second part (112) that includes the means and coupling area of the drive system (12) as well as the housing of the piston rod (121) to which the piston (13) is attached. Both parts (111, 112) are coupled to obtain a valve body assembly (11) with two pieces (111, 112).

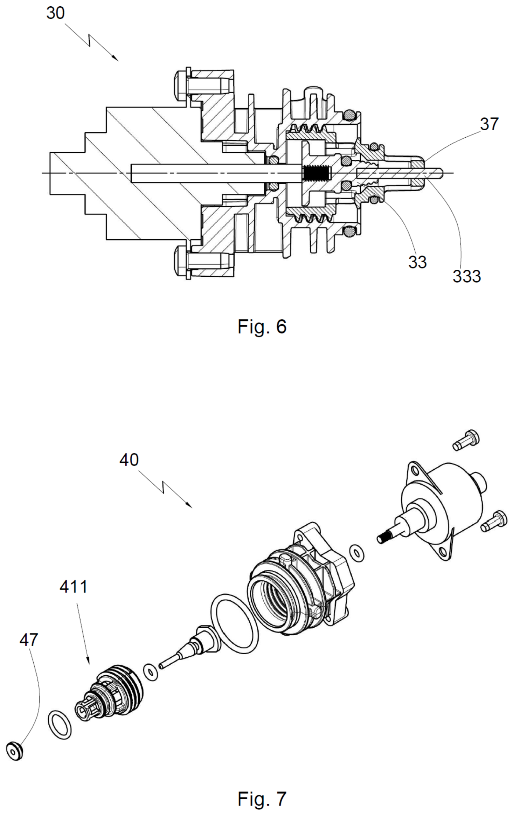

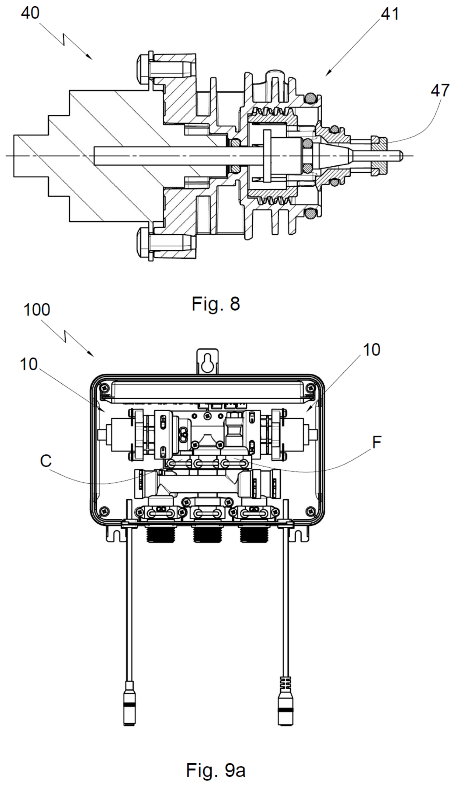

As an alternative to this configuration of the valve body, as can be seen in Figure 7 and Figure 8, there is a valve (40) wherein the valve body (41) has a first part (411) that does not include in the same part the guiding housing (47) for the movement of the piston (43), this guiding housing (47) being an independent part that is specially chosen from different material and with the appropriate and specific tribological properties for its function, unlike the other parts of the first part (411) of the valve body (41).

Also alternatively to this configuration of the valve body, not shown in the figures, the parts and components of the first and second parts of the valve body may be formed in a single part.

Continuing with the first preferred embodiment, the piston (13) is moved by the drive system (12) along an axial movement path that goes from a maximum passage flow regulation position, where the liquid passage section between the outer surface (132) of the piston and the seat (14) of the valve body (11) is maximum, to a closing position where the seal (131) of the piston closes on the area of the seat (14). The flow regulation occurs in the regulation zone (15) where the piston body (13) according to its position with respect to the seat (14) throttles to a greater or lesser extent in the flow of liquid passing through the free section between said piston (13) and seat (14). The actuation of the drive system (12) is controlled by a control system external to the drive system (12) itself, which modifies the displacement of the piston rod (121) according to the flow of liquid through the valve (10) necessary to supply according to the specific needs.

With this regulation system the geometry of the piston (13) together with the geometry of the seat (14) define a characteristic pattern for each geometry for variation of the liquid passage section, and therefore of the passage flow rate. In the present embodiment, the piston geometry (13) has a frustoconical shape, with different sections of inclinations of the generatrix of the piston body (13). Other variable geometry profiles on the piston are possible, such as elliptical profiles or ones formed by straight and/or curved sections without defining a specific geometry profile, as long as there is a variation in the geometry of the piston profile or at least a variation in the free passage section between the piston body (13) and the seat (14), as the piston (13) moves with respect to said seat (14).

The piston (13) comprises a front guiding appendage (133) integrally joined to the body of the piston (13) coaxial to the piston rod (121) of displacement of said piston (13). This guiding appendage (133), which in the present embodiment is formed in a single piece with the body of the piston (13), is inserted for its support and guidance in the guiding housing (17) to maintain coaxiality of the movement of the piston (13) with its piston rod (121) at any point of its displacement, avoiding the vibrations and noises existing in the prior art. The guiding housing (17) is formed by a ring-shaped body in this embodiment, although other geometries complementary to the guide appendage are possible, with a passage (171) through it, wherein the geometry of the passage is complementary to that of the guiding appendage (133), both configured (133,171) so that, as mentioned above, the guiding housing remains coaxial with the guiding appendage throughout its displacement between the extreme positions of regulation by the support and sliding of the guiding appendage (133) in the guiding housing (17).

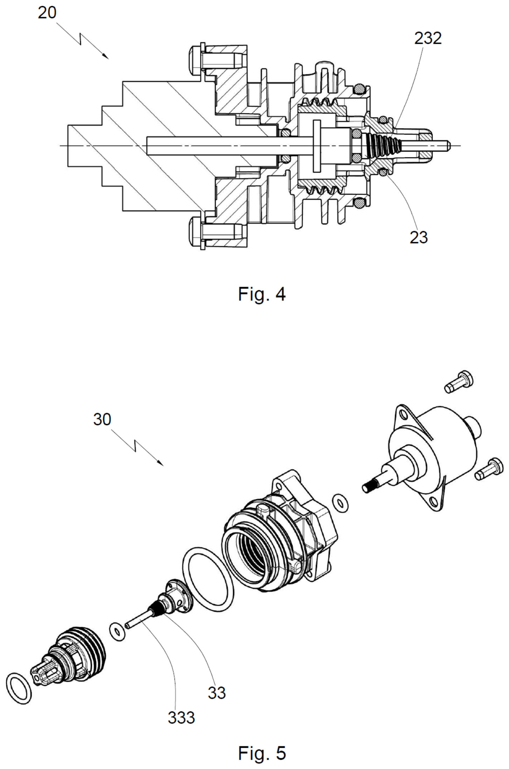

As shown in Figures 5 and 6, alternatively to the configuration of the guiding appendage (333), said guiding appendage (333) is a part independent of the piston (33) of the valve (30), wherein the material of this guiding appendage (333) is a different material from that of the piston body (33) so that its properties allow a more effective operation taking into account the friction with the guiding housing (37). In this embodiment, it is understood that the guiding appendage (333) is composed mostly of stainless steel, while the piston (33) to which it is coupled is composed mostly of a plastic material, being able to rationalize costs of the part that does not need to have improved tribological properties.

The valve (10) has a liquid inlet (18) to the regulation zone (15) where the flow of liquid is throttled in the regulation zone (15) by the position of the piston (13) with respect to the seat (14), the valve (10) having an outlet (19) of the liquid with the regulated flow.

The liquid outlet (19) from the regulation zone (15) is made radially, that is, through openings arranged radially in the side walls (151), substantially parallel to the axis of displacement of the piston (13).

This configuration prevents the accumulation of particles in this zone of the guiding housing (17, 37) of the appendage (133, 333), since this guiding housing (17,37) is not arranged as a blind hole, but as a through opening adjacent to the liquid outlet zone (19) of the regulation zone minimizing the possibility of accumulation of any particles that the liquid may contain.

According to an alternative embodiment of the arrangement of openings of the liquid outlet (19) of the regulation zone, part of the openings must be arranged in an axial configuration, perpendicular to the axis (12) of displacement of the piston and maintaining in part the coaxial direction of the passage of the liquid through the regulation zone (15). This distribution of the openings of the liquid outlet (19) of the regulation zone (15) is configured so that the outlet surfaces are mostly located on the side walls making a radial outlet.

As an alternative to the configuration of the piston (23, 33), as shown in Figures 3 to 6, the outer surface (232, 332) of the piston (23, 33) has a helical groove for the passage of liquid through it, increasing the pressure drop of the liquid flow and allowing a more effective regulation in the low flow rate range.

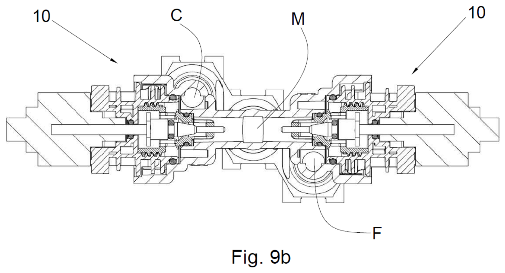

As can be seen in Figures 9a and 9b, the valves (10, 20, 30, 40) are integrated in a liquid regulation and supply device (100) of the mixer box type, which comprises an electronic valve such as those described in the previous embodiments for each of the liquid inlets (F, C) to said liquid mixer box, supplying the flow regulated in each of them for mixing in the area (M) of the box destined for it.

As an alternative to this previous embodiment, the liquid regulation and supply device is configured as an electronic tap type device, which comprises a valve (10, 20, 30, 40) for each of the liquid inlets to said tap, not shown in the figures.

Despite the fact that reference has been made to a several specific embodiments of the invention, it is evident for a person skilled in the art that the electronic valve with a linear drive motor, as well as the water supply device including the same, are susceptible to numerous variations and modifications, and that all the aforementioned details can be replaced by other technically equivalent details without detracting from the scope of the protection defined by the attached claims.

## Claims

1. Electronic flow regulation valve with a seat and motor-driven piston, wherein the electronic flow regulation valve (10, 20, 30, 40) comprises a valve body (11, 41) to which a drive system (12) is coupled, wherein the valve body (11, 41) comprises a regulation zone (15) with at least one connection to a liquid inlet (18) to a regulation zone (15) inside the electronic flow regulation valve and a connection to a liquid outlet (19) of the regulation zone (15) inside the electronic flow regulation valve, wherein the regulation zone (15) comprises a flow regulation system formed by at least one displaceable piston (13, 23, 33) that throttles a passage flow when closing on a seat (14), wherein the piston (13, 23, 33) is actuated by the drive system (12) of the electronic flow regulation valve (10, 20, 30, 40) between two extreme positions, from a closed position wherein the piston (13, 23, 33) closes completely by coupling on the seat (14), to a fully open position wherein the liquid passage section between the piston (13, 23, 33) and the seat (14) is maximum,
**characterized in that** the piston (13, 23, 33) comprises a variable geometry profile body and a front guiding appendage (133, 333) solidly attached to said variable geometry profile body, as a projection that protrudes frontally at the end of the piston (13, 23, 33) located downstream, wherein the guiding appendage (133, 333) is located coaxial with the piston rod (121) of displacement of the piston (13, 23, 33) and passes through a guiding housing (17, 47),
wherein the valve body (11, 41) comprises this guiding housing (17, 47) downstream at its end part of the valve body (11, 41), wherein the guiding housing (17, 47) is formed by at least one passage (171) through a guide body, wherein the geometry of the passage is complementary to that of the guiding appendage (133, 333), both configured so that the guiding housing (17, 47) remains coaxial with the guiding appendage throughout its displacement between the extreme positions of regulation by the support and sliding of the guiding appendage (133, 333) in the guiding housing (17, 47); and
wherein the valve body (11, 41) comprises a liquid outlet (19) from the regulation zone (15) downstream of the regulation of its flow by the interaction between the piston (13, 23, 33) and the seat (14), so that the outlet is performed, at least, radially by one or more liquid outlet openings (16) arranged substantially parallel to the axis of displacement of the piston (13, 23, 33).

2. Electronic flow regulation valve, according to claim 1, wherein the regulation zone (15) comprises one or more openings arranged substantially parallel to the axis of displacement of the piston (13, 23, 33) forming a radial liquid outlet from said regulation zone (15), as well as one or more liquid outlet openings (16) arranged substantially transverse to the axis of displacement of the piston (13, 23, 33) forming a liquid outlet with flow substantially parallel to the axis of displacement of the piston (13, 23, 33).

3. Electronic flow regulation valve, according to claim 2, wherein the liquid outlet (19) of the regulation zone (15) is mostly radial.

4. Electronic flow regulation valve, according to any of the preceding claims, wherein the guiding housing (17) is formed by a guide body forming a single piece with the seat (14) of the regulation zone (15) and the liquid outlet openings (16) of the regulation zone (15), wherein this single piece is independent and is coupled to the rest of the valve body (11) at the end thereof downstream of the regulation zone (15), configured so that the passage opening (171) that passes through the guiding appendage (133, 333) of the piston (13,33) remains coaxial with the displacement of said guiding appendage (133, 333) and, consequently, with the assembly that said guiding appendage (133, 333) forms with the piston (13, 23, 33) and its axis, in all its displacement positions.

5. Electronic flow regulation valve, according to any of claims 1 to 3, wherein the guiding housing (17) is formed by a guide body forming a single piece with the seat (14) of the regulation zone (15) and the liquid outlet openings (16) of the regulation zone (15) and in turn a single piece with the rest of the valve body, configured so that the passage opening (171) that passes through the guiding appendage (133, 333) of the piston (13, 23, 33) remains coaxial with the displacement of said guiding appendage (133, 333) and, consequently, with the assembly that said guiding appendage (133, 333) forms with the piston (13, 23, 33) and its axis, in all its displacement positions.

6. Electronic flow regulation valve, according to any of claims 1 to 3, wherein the guiding housing (47) is formed by a guide body forming a part separate from the part that defines the assembly of the seat (14) of the regulation zone (15) and the liquid outlet openings (16) of the regulation zone (15), wherein this separate part is coupled to the part that defines the seat (14) of the regulation zone (15), wherein this assembly piece is the same piece as the rest of the valve body (40) or is another independent piece that is integrally joined to the rest of the valve body (40) at its end downstream of the regulation zone (15), configured so that the passage opening (171) that crosses the guiding appendage (133, 333) of the piston (13, 33) remains coaxial with the displacement of said guiding appendage and, consequently, with the assembly that said guiding appendage (133, 333) forms with the piston (13, 23, 33) and its axis, in all its displacement positions.

7. Electronic flow regulation valve, according to any of the preceding claims, wherein the guide body is formed by a ring configured to have an opening of complementary geometry to the guiding appendage (133, 333) of the piston (13, 23, 33) and allow the slidably supported passage of said guiding appendage (133, 333) through it, while its ring geometry allows its integration or coupling in the part containing the liquid outlet openings (16) and the seat (14) of the regulation zone (15).

8. Electronic flow regulation valve, according to any of claims 4 to 7, wherein the guide body is located flush with the end downstream of said liquid outlet openings (16) so that a liquid accumulation tank is not generated in the liquid outlet (19) downstream of the liquid outlet openings.

9. Electronic flow regulation valve, according to any of the preceding claims, wherein the guiding appendage (333) on the piston is formed by a part separate from the variable geometry profile body of the piston (33), to which it is integrally coupled maintaining coaxiality of the piston assembly (33) and guiding appendage (333) with the displacement axis.

10. Electronic flow regulation valve, according to claim 9, wherein the guiding appendage (333) is mainly composed of stainless steel, while the piston body (33) to which it is coupled is mainly composed of a plastic material.

11. Electronic flow regulation valve, according to any of the preceding claims, wherein the guiding appendage (133) is formed by the same piece as the variable geometry profile body of the piston (13, 23), wherein the assembly in a single piece, piston body and guiding appendage (133), is coaxial with the displacement axis of the assembly.

12. Electronic flow regulation valve, according to any of the preceding claims, wherein the variable geometry profile body of the piston (13, 23, 33) is of frustoconical geometry.

13. Electronic flow regulation valve, according to any of claims 1 to 11, wherein the variable geometry profile body of the piston (13, 23, 33) is of elliptical geometry.

14. Electronic flow regulation valve, according to any of claims 1 to 11, wherein the variable geometry profile body of the piston (13, 23, 33) is of a geometry composed of straight and/or curved sections without defining a profile with a specific geometry.

15. Electronic flow regulation valve, according to any of the preceding claims, wherein the variable geometry profile body of the piston (23, 33) is configured such that the outer surface (232, 332) has a helical groove for the passage of liquid through it at the time when the position of the piston (23, 33) with respect to the seat (14) and its coupling surfaces on the seat (14) allow the passage of liquid towards the liquid outlet (19) of the valve body (11, 41).

16. Liquid regulation and supply device, wherein this liquid regulation and supply device (100) includes at least one electronic flow regulation valve (10, 20, 30, 40) with a linear drive motor having a control system that controls the drive of the regulation system of the at least one electronic flow regulation valve (10, 20, 30, 40), **characterised in that** the electronic flow regulation valve (10, 20, 30, 40) is configured as indicated in any of claims 1 to 15.

17. Liquid regulation and supply device, according to claim 16, wherein this liquid regulation and supply device (100) is configured as a mixing box with an electronic flow regulation valve (10, 20, 30, 40) as described in any of claims 1 to 15 for each of the liquid inlets (F, C) to said liquid mixing box.

18. Liquid regulation and supply device, according to claim 16, wherein this liquid regulation and supply device (100) is configured as an electronic tap with an electronic flow regulation valve (10, 20, 30, 40) as described in any of claims 1 to 15 for each of the liquid inlets (F, C) to the electronic liquid regulation and supply tap.
